# EUROPEAN PATENT SPECIFICATION

(11) **EP 2 743 536 B1**
(45) Date of publication and mention of the grant of the patent: **08.05.2019**
(21) Application number: 13191570.4
(22) Date of filing: 05.11.2013
(51) Int. Cl.: F16F 7/12, E01F 15/14

(54) **Collision energy-absorbing device and an associated road-blocking device**
Aufprallenergieabsorbierende Vorrichtung und zugehörige Straßenbegrenzungsvorrichtung
Dispositif d'absorption d'énergie de collision et dispositif de blocage de route associé

(30) Priority: 15.11.2012 NL 2009814
(43) Date of publication of application: 18.06.2014
(73) Proprietor: Wagenaar Wegbebakening, 8256 SM Biddinghuizen (NL)
(72) Inventor: Wagenaar, Rob, 8256 SM Biddinghuizen (NL); Wagenaar, Gerrit Lambertus, 8081 VA Elburg (NL); Wagenaar, Jeroen, 8081 XS Elburg (NL)
(74) Representative: Klavers, Cornelis

(56) References cited:
- EP-A1- 0 221 438
- US-A- 4 190 275
- US-A- 4 770 420
- US-A- 6 098 767

## Description

The present invention relates to a collision energy-absorbing device according to the preamble of claim 1.

EP-0221438 A1 discloses such a collision energy-absorbing device, as outlined in the preamble of claim 1. This device which is intended to be mounted to the rear of a vehicle such as a highway maintenance truck includes diaphragms, and a number of cell assemblies is interposed between adjacent ones of the diaphragms. The entire device is enclosed in a preferably airtight skin which is riveted to peripheral flanges of the diaphragms. The cell assemblies define stabilized columns against long column buckling during impact, thereby promoting short column buckling which absorb a greater energy during deformation.

A drawback of such known devices, however, resides in that their effectiveness is mediocre, in particular with respect to absorption of the kinetic energy from the vehicle colliding with the device.

It is an object of the present invention to provide an improved device of the type described hereinabove, in particular a device whose effectiveness of absorbing collision energy is improved.

This object is achieved by means of a device according to claim 1.

The absorbing device is constructed such that in case of a collision, kinetic energy is absorbed by plastic deformation of the connection body and/or the attachments between the plate-shaped bodies and the connection body, kinetic energy from an object, such as a vehicle, colliding with the absorbing device is effectively absorbed by said plastic deformation of the absorbing device, not only in the absorbing elements but also in said other parts.

The absorbing elements comprise blocks provided with a plurality of honeycomb-shaped openings, which blocks are provided in the interspaces between the plate-shaped bodies, with the through holes of the honeycombs extending from the front side to the rear side of the absorbing device. This has the advantage that the conversion of kinetic energy to plastic deformation energy is extremely effective and hence the absorbing action of the absorbing device is also extremely effective. In addition, material comprising honeycomb-shaped apertures is commercially available ready for use, and is manufactured on a large scale, resulting in a low cost price of the absorbing device according to this embodiment. Moreover, the use of honeycomb material enables a very lightweight construction to be obtained.

Said absorbing elements may comprise at least one wall plate which is provided along the circumferential edges of the plate-shaped bodies and which is preformed slightly outwards, at the part situated in between said circumferential edges, in order to deform further in the outward direction in case of a collision. Therefore, in case of a collision, the honeycomb filling will not be deformed by the wall plate, resulting in an increased deformation possibility of the honeycomb, and hence more collision energy can be absorbed in the honeycomb of the absorbing device.

Moreover, said deformation takes place in a very controlled manner, enabling, for example, symmetric deformation of the absorbing device to be obtained, resulting in a further increase of the effectiveness thereof.

In particular in an embodiment, the plate may be provided with a longitudinal bend extending from the front side to the rear side of the absorbing device in order to achieve an even more controlled deformation process.

In another embodiment, the connection between the plate-shaped bodies and the absorbing elements comprises a number of connection elements which are each arranged to fail when a predetermined load is surpassed. By virtue thereof, the deformation of the absorbing device, including the plastic deformation, can be controlled to a large degree, particularly the development over time during a collision and the associated deformation.

Each connection element may comprise a pop rivet which has been passed through an opening in an edge of a plate-shaped body and an absorbing element. As a result, at a pre-defined and well predictable load, the pop rivet will tear loose; this will not happen in the case of pop rivets inserted into openings with an uninterrupted edge.

In addition, the effectiveness can be further increased by providing the edge of said opening in the plate-shaped body with at least one slit which opens into said opening in the plate-shaped body. Alternatively, two radially extending slits may be provided.

In another, specific embodiment, the absorbing element comprises four flat plates provided at and along the four outer edges of the plate-shaped bodies. In this manner, a uniform deformation distribution over the front side of the absorbing device becomes possible and hence over the absorbing device as a whole.

In a particular embodiment, the plate-shaped bodies comprise stiffening ribs, which increase the bending stiffness about an axis in the plane of the plate. As a result, collision energy is absorbed to a larger degree also by the plate-shaped bodies.

In yet another embodiment, between at least two adjoining plate-shaped bodies located centrally between the front side and the rear side of the absorbing device, stiffening members are provided with respect to the other absorbing elements. By virtue thereof, deflection of the absorbing elements can be substantially prevented, in spite of the fact that said elements may be very thin and light.

In a further embodiment, the plate-shaped bodies are provided with openings allowing passage of air. Thus, airtight spaces are prevented in which, during a collision, air could provide for uncertainty in failure load determination, and/or non-uniform deformation, particularly between left side and right side or upper side and lower side of the front side of the absorbing device.

The invention further relates to a mobile impact buffer, comprising at least one wheel and a framework to which the absorbing device for collision energy according to any one of the preceding claims is attached.

Such an impact buffer solves disadvantages similar to those mentioned with respect to the absorbing device according to the invention, and offers similar advantages.

The invention will now be explained in greater detail with reference to the figures mentioned below, in which corresponding parts are indicated by means of the same reference numerals. In the figures:
Figure 1 is a perspective view in parts of an absorbing device according to the invention, from which the outer coating and the honeycomb filling have been removed,
Figure 2 is a perspective view of the absorbing device of fig. 1, in which the outer coating has been provided,
Figure 3 is a side view of an impact buffer, in which the absorbing device of Figures 1 and 2 is applied;
Figure 4 is a perspective view of basic material for an absorbing element as used in the absorbing device of Figures 1 and 2.

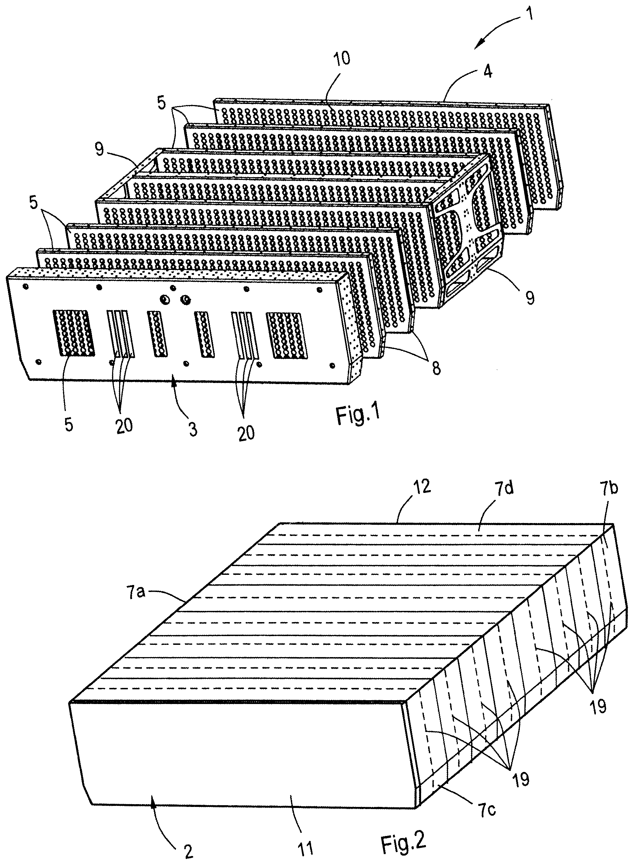

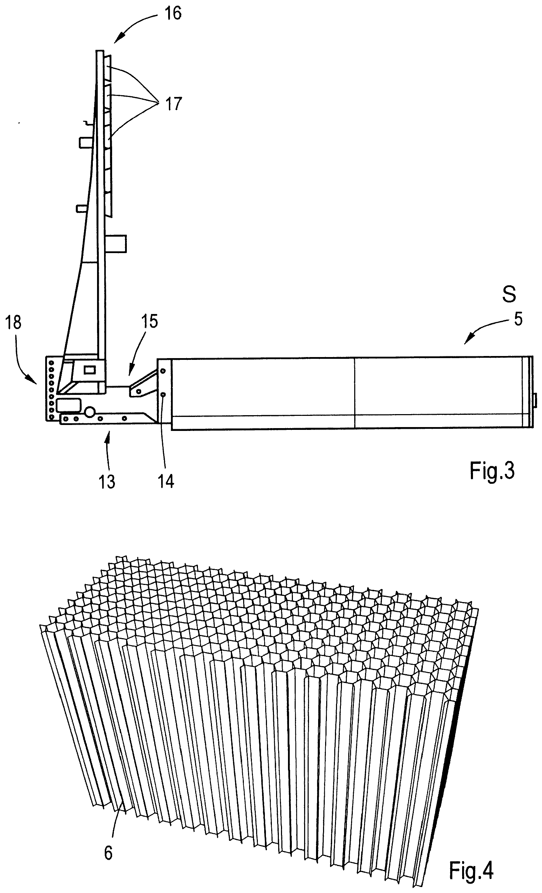

Figure 1 shows an absorbing device 1 according to the invention, from which the housing 2 and absorbing elements have been removed. The housing is visible in Figure 2, and the basic material for the absorbing elements is visible in Figure 4.

The absorbing device 1 of aluminium has a flat front side 3, a rear side 4 spaced apart from said front side and extending parallel thereto, and eight bodies 5 of sheet metal are arranged between said front side 3 and said rear side 4, which bodies are predominantly flat and extend parallel to the front and rear side 3 and 4, respectively, and they are spaced apart from each other. Between each pair of juxtaposed bodies 5, an absorbing element 6 is provided which is composed of a honeycomb construction, that is to say a construction comprising openings in the form of a regular hexagon, wherein, in this example, the openings are situated so as to extend from the front side to the rear side of the absorbing device. Figure 4 is a more detailed view of the honeycomb construction of the absorbing element 6.

Figure 2 shows the device of Figure 1, which is now provided with a housing 2 which is arranged around the parts described with reference to Figure 1. The housing 2 comprises four walls 7a-d, namely a left side wall 7a, a right side wall 7b, a lower wall 7c and an upper wall 7d. These walls form connection elements for the bodies 5, which means that they are attached to the flanged circumferential edges of said bodies 5 by means of pop rivets, which are not shown in more detail. In addition, the openings in the walls 7a-7d and in the flanged circumferential edges, serving as stiffening ribs 8, of the bodies 5, through which the pop rivets extend, are each provided with two slits, which extend radially from the opening and which are located in the material surrounding the opening.

The side walls 7a and 7b are each preformed outwards, in this case by means of a bend which extends from the front side 3 to the rear side 4 of the device, so that in the case of deformation of the absorbing device due to a collision, these walls will deform outwards rather than directly inwards, and hence will not or hardly influence the deformation of the absorbing elements 6. The operation of the absorbing device will be explained in more detail hereinafter.

In the case of three bodies located substantially centrally between the front side 3 and the rear side 5 of the absorption device, additional connections 9 are provided between said bodies 5. Moreover, the bodies 5 are provide with a large number of openings 10 for allowing the passage of air.

The front side 3 and the rear side 4 of the absorbing device 1 are provided with a plate 11 and 12, respectively, (see Figure 1) which have been stiffened to counteract bending thereof, which plates are provided next to and mainly parallel to a plate-shaped body situated at the end of the row of plate-shaped bodies. The stiffened plate 11 on the front side 3 is also thicker than the bodies 5, so that said plate 11, purely because of its mass, is capable of absorbing part of the kinetic energy from a vehicle colliding with the absorbing device.

Figure 3 shows an impact buffer S, which comprises the absorbing element 1 of Figures 1 and 2, said buffer being attached to a frame 13 provided with, inter alia, a hinged joint 14 and a hydraulic piston-cylinder combination 15 by means of which the absorbing device can be tilted upwards through 90 degrees with respect to the shown horizontal position thereof. In the upwards tilted position, the absorbing element is positioned next to and parallel to a traffic warning sign 16, which can show signs to passing traffic through the use of a number of lamps 17. The impact buffer S is also provided with a suspension system 18 by means of which the impact buffer S can be attached to a vehicle, such as a small truck.

The operation of the above-described absorbing device 1 is as follows.

In case a vehicle collides at high speed with the front side 3 of said absorbing device, the vehicle is slowed down by the mass of the stiffened plate 11, which, in addition, takes place in a uniformly distributed manner between left side and right side and lower side and upper side. Subsequently, the absorbing device will be subject to plastic deformation, in particular the absorbing elements 6 comprising the honeycomb construction, as well as the side walls 7a-7d which will predominantly be subject to outward deformation, and the pop rivets will cause the edges of the openings where they are located to bend outwards and eventually they will become detached from said openings. By virtue of the presence of said radial notches at the openings, the force/deformation at which the rivets become detached can be more accurately estimated beforehand as compared to openings which are not provided with notches.

By virtue of the chosen construction, also in the case of a slightly oblique collision, where part of the front side 3 of the device 1 is hit, the load, that is to say the collision energy, is distributed throughout the front side 3. Subsequently, as a result of absorbing elements 6 and plates 5 alternating with one another, the device 1 is subject to further, uniform deformation, which means that, excepting extremely oblique collisions, the front side 3 remains flat to a substantial degree as well as parallel to the rear side 4.

The walls 7a-7d, in particular bent side walls 7a and 7b, contribute to this, as well as the attachment between the walls 7a-7d and the plates 5 by means of pop rivets. The connections 9 guide the deformation of the side walls 7a and 7b and also cause the absorbing elements 6 situated between these connections 9 to start deforming at a slightly later point in time as compared to the other absorbing elements 6, which also enhances deformation which is uniform in particular in the sense that the plates 5 remain substantially parallel to one another during the deformation of the device 1, that is to say during receiving and stopping a vehicle colliding with the absorbing device.

The walls 7a-7d also comprise preformed flexion lines 19 (see Figure 2) which also contribute to the guided, controlled deformation of the absorption body 1.

The elongated thinned portions 20 form bending seams allowing a slight deformation of the front side 3 in the case of a slightly oblique collision, so as to deform along with the deformation of the colliding vehicle and subsequently still uniformly absorb the collision.

Figure 4 shows a block of basic material composed of honeycomb-shaped aluminium, which, after being cut into slices, is used in the absorbing element shown in Figures 1 and 2.

Variants to the exemplary embodiment described hereinabove are possible, which fall within the scope of the invention as defined in the claims. For example, the front side and the rear side of the absorbing device may be oval or even round in shape instead of rectangular. Moreover, the chosen materials may be other than aluminium.

## Claims

1. A collision energy-absorbing device (1),
comprising:
- a substantially flat front side (3),
- a rear side (4) which is situated at a distance from said front side (3),
- a number of plate-shaped bodies (5) which are arranged at mutual distances in a row between said front side (3) and said rear side (4), and
- a number of absorbing elements (6) which are arranged in the respective interspaces between adjoining plate-shaped bodies (5),
- at least one connection body (9) which is provided at the circumferential edge of said plate-shaped bodies (5) so as to interconnect said bodies (5),
wherein the absorbing device (1) is constructed such that in case of a collision, kinetic energy is absorbed by plastic deformation of the connection body (9) and/or the attachments between the plate-shaped bodies (5) and the connection body (9).
**characterized in that** the absorbing elements (6) comprise blocks provided with a plurality of honeycomb-shaped openings, which blocks are provided in the interspaces between the plate-shaped bodies (5), with the through holes of the honeycombs extending from the front side (3) to the rear side (4) of the absorbing device (1) which further comprises at least one wall plate (7a, 7b) which is provided along the circumferential edges of the plate-shaped bodies (5) and which is preformed slightly outwards, at the part situated in between said circumferential edges, in order to deform further in the outward direction in case of a collision.

2. The absorbing device (1) according to claim 1, wherein said plate (7a, 7b) is provided with a longitudinal bend (19) extending from the front side (3) to the rear side (4) of the absorbing device (1).

3. The absorbing device (1) according to claim 1 or 2, **characterized in that** the connection between the plate-shaped bodies (5) and the absorbing elements (6) comprises a number of connection elements which are each arranged to fail when a predetermined load is surpassed.

4. The absorbing device (1) according to claim 3, wherein each connection element comprises a pop rivet which has been passed through an opening in an edge of a plate-shaped body (5) and an absorbing element (6).

5. The absorbing device (1) according to claim 4, wherein the edge of said opening in the plate-shaped body (5) has at least one slit which opens into said opening in the plate-shaped body (5).

6. The absorbing device (1) according to any one of the preceding claims, wherein the absorbing element (6) comprises four flat plates (7a, 7b, 7c, 7d) provided at and along the four outer edges of the plate-shaped bodies (5).

7. The absorbing device (1) according to any one of the preceding claims, wherein the plate-shaped bodies (5) comprise stiffening ribs (8), which increase the bending stiffness about an axis in the plane of the plate (7a, 7b).

8. The absorbing device (1) according to any one of the preceding claims, wherein between at least two adjoining plate-shaped bodies (5) located centrally between the front side (3) and the rear side (4) of the absorbing device (1), additional connections (9) are provided between the plate-shaped bodies (5).

9. The absorbing device (1) according to any one of the preceding claims, wherein the plate-shaped bodies (5) are provided with openings (10) allowing passage of air.

10. A mobile impact buffer, comprising at least one wheel and a framework to which the absorbing device (1) for collision energy according to any one of the preceding claims is attached.

## Patentansprüche

1. Kollisionsenergieabsorptionsvorrichtung (1), umfassend:
- eine im Wesentlichen flache Vorderseite (3),
- eine Rückseite (4), welche sich in einem Abstand von der Vorderseite (3) befindet,
- eine Anzahl von plattenförmigen Körpern (5), welche in gegenseitigen Abständen in einer Reihe zwischen der Vorderseite (3) und der Rückseite (4) angeordnet sind, und
- eine Anzahl von Absorptionselementen (6), welche in den jeweiligen Zwischenräumen zwischen benachbarten plattenförmigen Körpern (5) angeordnet sind,
- mindestens einen Verbindungskörper (9), welcher am Umfangsrand der plattenförmigen Körper (5) vorgesehen ist, um die Körper (5) miteinander zu verbinden,
wobei die Absorptionsvorrichtung (1) derart konstruiert ist, dass im Falle einer Kollision kinetische Energie durch plastische Deformation des Verbindungskörpers (9) und/oder der Befestigungen zwischen den plattenförmigen Körpern (5) und dem Verbindungskörper (9) absorbiert wird,
**dadurch gekennzeichnet, dass** die Absorptionselemente (6) Blöcke umfassen, die mit einer Vielzahl von wabenförmigen Öffnungen versehen sind, wobei die Blöcke in den Zwischenräumen zwischen den plattenförmigen Körpern (5) vorgesehen sind, wobei die Durchgangslöcher der Waben sich von der Vorderseite (3) zur Rückseite (4) der Absorptionsvorrichtung (1) erstrecken, welche ferner mindestens eine Wandplatte (7a, 7b) umfasst, welche entlang der Umfangsränder der plattenförmigen Körper (5) vorgesehen ist und welche leicht nach außen vorgeformt ist und sich an dem Teil zwischen den Umfangsrändern befindet, um sich im Falle einer Kollision weiter in die Richtung nach außen zu deformieren.

2. Absorptionsvorrichtung (1) nach Anspruch 1, wobei die Platte (7a, 7b) mit einer länglichen Krümmung (19) versehen ist, die sich von der Vorderseite (3) zur Rückseite (4) der Absorptionsvorrichtung (1) erstreckt.

3. Absorptionsvorrichtung (1) nach Anspruch 1 oder 2, **dadurch gekennzeichnet, dass** die Verbindung zwischen den plattenförmigen Körpern (5) und den Absorptionselementen (6) eine Anzahl von Verbindungselementen umfasst, welche jeweils angeordnet sind, um nachzugeben, wenn eine vorbestimmte Last überstiegen wird.

4. Absorptionsvorrichtung (1) nach Anspruch 3, wobei jedes Verbindungselement eine Schussniete umfasst, welche durch eine Öffnung hindurchgeführt wurde an einem Rand eines plattenförmigen Körpers (5) und eines Absorptionselements (6).

5. Absorptionsvorrichtung (1) nach Anspruch 4, wobei der Rand der Öffnung in dem plattenförmigen Körper (5) mindestens einen Schlitz aufweist, welcher sich in die Öffnung des plattenförmigen Körpers (5) öffnet.

6. Absorptionsvorrichtung (1) nach einem der vorhergehenden Ansprüche, wobei das Absorptionselement (6) vier flache Platten (7a, 7b, 7c, 7d) umfasst, die an oder entlang den vier Außenränder der plattenförmigen Körper (5) vorgesehen sind.

7. Absorptionsvorrichtung (1) nach einem der vorhergehenden Ansprüche, wobei die plattenförmigen Körper (5) Versteifungsstege (8) umfasst, welche die Krümmungssteifigkeit um eine Achse auf der Ebene der Platte (7a, 7b) erhöhen.

8. Absorptionsvorrichtung (1) nach einem der vorhergehenden Ansprüche, wobei zwischen mindestens zwei benachbarten plattenförmigen Körpern (5), die zentral zwischen der Vorderseite (3) und der Rückseite (4) der Absorptionsvorrichtung (1) angeordnet sind, zusätzliche Verbindungen (9) zwischen den plattenförmigen Körpern (5) vorgesehen sind.

9. Absorptionsvorrichtung (1) nach einem der vorhergehenden Ansprüche, wobei die plattenförmigen Körper (5) mit Öffnungen (10) versehen sind, die den Durchlass von Luft gestatten.

10. Beweglicher Stoßdämpfer, umfassend mindestens ein Rad und einen Rahmen, an welchen die Absorptionsvorrichtung (1) für die Kollisionsenergie nach einem der vorhergehenden Ansprüche befestigt ist.

## Revendications

1. Dispositif d'absorption d'énergie de collision (1), comprenant:
- un côté frontal essentiellement plat (3),
- un côté arrière (4) qui est situé à une distance dudit côté frontal (3),
- un nombre de corps en forme de plaque (5) qui sont disposés à des distances mutuelles dans une rangée entre ledit côté frontal (3) et ledit côté arrière (4), et
- un nombre d'élément absorbants (6) qui sont disposés dans les espaces intercostaux respectifs entre les corps en forme de plaque (5) adjacents,
- au moins un corps de connexion (9) qui est fourni au bord circonférentiel desdits corps en forme de plaque (5) de manière à interconnecter lesdits corps (5),
où le dispositif d'absorption (1) est construit de telle manière qu'en cas de collision, l'énergie cinétique est absorbée par déformation plastique du corps de connexion (9) et/ou des attachements entre les corps en forme de plaque (5) et le corps de connexion (9),
**caractérisé en ce que** les éléments absorbants (6) comprennent des blocs fournis avec une pluralité d'ouvertures en forme de nid d'abeilles, lesquels blocs sont fournis dans les espaces intercostaux entre les corps en forme de plaque (5), avec les trous à travers les nids d'abeilles s'étendant du côté frontal (3) au côté arrière (4) du dispositif absorbant (1) qui comprend en outre au moins une plaque de paroi (7a, 7b) qui est fournie le long des bords circonférentiels des corps en forme de plaque (5) et qui est préformée légèrement vers l'extérieur, à la partie située entre lesdits bords circonférentiels, pour se déformer encore dans la direction vers l'extérieur dans le cas d'une collision.

2. Dispositif absorbant (1) selon la revendication 1, dans lequel ladite plaque (7a, 7b) est fournie avec une courbure longitudinale (19) s'étendant du côté frontal (3) au côté arrière (4) du dispositif absorbant (1).

3. Dispositif absorbant (1) selon la revendication 1 ou 2, **caractérisé en ce que** la connexion entre les corps en forme de plaque (5) et les éléments absorbants (6) comprend un nombre d'éléments de connexion qui sont disposés pour échouer quand une charge prédéterminée est dépassée.

4. Dispositif absorbant (1) selon la revendication 3, dans lequel chaque élément de connexion comprend un rivet pop qui a été passé à travers une ouverture dans un bord d'un corps en forme de plaque (5) et d'un élément absorbant (6) .

5. Dispositif absorbant (1) selon la revendication 4, dans lequel le bord de ladite ouverture dans le corps en forme de plaque (5) a au moins une fente qui s'ouvre dans ladite ouverture dans le corps en forme de plaque (5).

6. Dispositif absorbant (1) selon l'une quelconque des revendications précédentes, dans lequel l'élément absorbant (6) comprend quatre plaques plates (7a, 7b, 7c, 7d) fournies à et le long des quatre bords externes des corps en forme de plaque (5).

7. Dispositif absorbant (1) selon l'une quelconque des revendications précédentes, dans lequel les corps en forme de plaque (5) comprennent des nervures de renforcement (8), qui augmentent la rigidité de courbure autour d'un axe dans le plan de la plaque (7a, 7b).

8. Dispositif absorbant (1) selon l'une quelconque des revendications précédentes, dans lequel entre au moins deux corps en forme de plaque (5) adjacents situés centralement entre le côté frontal (3) et le côté arrière (4) du dispositif absorbant (1), des connexions supplémentaires (9) sont fournies entre les corps en forme de plaque (5).

9. Dispositif absorbant (1) selon l'une quelconque des revendications précédentes, dans lequel les corps en forme de plaque (5) sont pourvus d'ouvertures (10) permettant le passage de l'air.

10. Tampon d'impact mobile, comprenant au moins une roue et un cadre auxquels le dispositif absorbant (1) pour l'énergie de collision selon l'une quelconque des revendications précédentes est attaché.
